# EUROPÄISCHE PATENTSCHRIFT

(11) **EP 3 717 194 B1**
(45) Veröffentlichungstag und Bekanntmachung des Hinweises auf die Patenterteilung: **08.12.2021**
(21) Anmeldenummer: 18807591.5
(22) Anmeldetag: 19.11.2018
(51) Int. Cl.: B29C 33/06, B29C 35/08

(54) **FORMGEBUNGSVORRICHTUNG, FORMGEBUNGSWERKZEUG MIT EINEM UMZUFORMENDEN TEIL UND VERFAHREN ZUM ERWÄRMEN EINER FORMGEBUNGSOBERFLÄCHE EINER FORMGEBUNGSHALBSCHALE ODER EINES UMZUFORMENDEN TEILS**
SHAPING DEVICE, SHAPING MOULD WITH A PART TO BE FORMED AND METHOD FOR HEATING A SHAPING SURFACE OF A SHAPING HALF-SHELL OR OF A PART TO BE FORMED
DISPOSITIF DE FORMAGE, OUTIL DE FORMAGE MUNI D'UNE PIÈCE À METTRE EN FORME ET PROCÉDÉ DE CHAUFFAGE D'UNE SURFACE DE FORMAGE D'UNE DEMI-COQUE DE FORMAGE OU D'UNE PIÈCE À METTRE EN FORME

(30) Priorität: 27.11.2017 DE 102017221152
(43) Veröffentlichungstag der Anmeldung: 07.10.2020
(73) Patentinhaber: RAMPF Machine Systems GmbH & Co. KG, 73117 Wangen (DE); RAMPF Holding GmbH & Co. KG, 72661 Grafenberg (DE)
(72) Erfinder: ABEL, Thomas, 73066 Uhingen (DE); DIZDAREVIC, Marc, 73066 Uhingen (DE); BEYERLEIN, Gerd-Sebastian, 72555 Metzingen (DE)
(74) Vertreter: Herzog, Markus
(86) Internationale Anmeldenummer: PCT/EP2018/081761
(87) Internationale Veröffentlichungsnummer: WO 2019/101684

(56) Entgegenhaltungen:
- WO-A2-2009/077524
- DE-A1-102012 000 822
- JP-A- S6 378 720
- US-A1- 2011 129 380
- US-A1- 2017 095 986
- US-A1- 2017 190 089

## Beschreibung

Die Erfindung betrifft eine Formgebungsvorrichtung, welche beispielsweise zur Herstellung von Kunststoffbauteilen oder/und kunststoffbasierten Faserverbundbauteilen verwendet werden kann, ein Formgebungswerkzeug mit einem umzuformenden Teil sowie ein Verfahren zum Erwärmen einer Formgebungsoberfläche einer Formgebungshalbschale oder eines umzuformenden Teils.

Bei der Herstellung von Kunststoffbauteilen bzw. kunststoffbasierten Faserverbundbauteilen wird ein Gussmaterial (z.B. ein Polymer oder ein Matrixpolymer) in eine Formgebungshalbschale gegeben, in welcher eine Faser- oder/und Gewebestruktur oder/und Prepregs abgelegt sein kann/können. Das Gussmaterial kann entweder vor dem Eingießen in die Formgebungshalbschale oder innerhalb der Formgebungshalbschale aufgeschmolzen werden. In beiden Fällen ist es für die Erzielung gewünschter Eigenschaften des fertigen Bauteils entscheidend, dass das Gussmaterial die Formgebungshalbschale vollständig ausfüllt und, wenn vorhanden, die Faser- oder/und die Gewebestruktur vollständig infiltriert. Um dies zu gewährleisten, ist es notwendig, dass sich das Gussmaterial in der Formgebungshalbschale zumindest über eine vorbestimmte Zeitdauer in einem aufgeschmolzenen und fließfähigen Zustand befindet. Hierzu muss dem Gussmaterial während dieser Zeitdauer Wärme zugeführt werden. Nachdem diese Zeitdauer verstrichen ist, kann eine Aushärtung durch Abkühlung des Gussmaterials in der Formgebungshalbschale erfolgen, wodurch das Kunststoffbauteil bzw. das kunststoffbasierte Faserverbundbauteil entsteht. Alternativ kann auch ein Vorformling bzw. ein formgebunden vorliegendes Halbzeug (z.B. eine Matte aus Vliesstoff mit Kunststoff-/Glasanteilen) zur Herstellung von Kunststoffbauteilen bzw. kunststoffbasierten Faserverbundbauteilen verwendet werden.

Dies bedeutet, dass sich bei der Herstellung von Kunststoffbauteilen bzw. kunststoffbasierten Faserverbundbauteilen an einen Verfahrensschritt, bei welchem hohe Temperaturen benötigt werden, ein weiterer Verfahrensschritt anschließt, bei welchen niedrige Temperaturen benötigt werden. Ein Formwerkzeug zur Herstellung von Kunststoffbauteilen bzw. von kunststoffbasierten Faserverbundbauteilen sollte daher dazu geeignet sein, ein schnelles Erwärmen und Abkühlen des zur Herstellung benötigten Gussmaterials oder Vorformlings bzw. formgebunden vorliegenden Halbzeugs zu ermöglichen, und eine sehr präzise formbare Formgebungsoberfläche aufweisen, um eine Negativgestalt mit feinen Strukturen für das herzustellende Kunststoffbauteil bzw. kunststoffbasierte Faserverbundbauteil bereitzustellen. Ferner sollte das Formwerkzeug auch im Serieneinsatz eine sehr gute Standfestigkeit aufweisen. Dies beinhaltet beispielsweise, dass die Formgebungsoberfläche eine im Wesentlichen gleichbleibende Oberflächengüte aufweist.

Herkömmliche Formwerkzeuge, welche diese Anforderungen erfüllen, bestehen typischerweise aus metallischen Materialien, beispielsweise einem Metallblock mit einer darin ausgebildeten Negativstruktur. In den Verfahrensschritten, bei welchen eine Temperierung notwendig ist, wird jeweils das gesamte metallische Material bzw. der gesamte Metallblock temperiert, also erwärmt bzw. abgekühlt. Dies führt zu langen Aufwärm- und Abkühlzeiten und einer damit einhergehenden langen Prozesszeit, welche wiederum unter dem Betrachtungspunkt eines effizienten Herstellungsverfahrens nachteilig ist.

Aus dem Dokument US 2017/095986 A1, welches als nächstliegender Stand der Technik erachtet wird, ist eine Formgebungsvorrichtung bekannt, welche einen Induktor und eine Formgebungshalbschale umfasst, wobei wenigstens eine Formgebungshalbschale ein aus einem mineralischen Material hergestelltes Formgebungsbasiselement und ein Formgebungsaufsatzelement umfasst, welche aneinander angeordnet sind, wobei der Induktor Wirbelströme in einer elektrisch leitfähigen Schicht des Formgebungsaufsatzelements induziert. Ferner sei auf die Dokumente US 2011 /129380 A1, US 2017/190089 03 A1, DE 10 2012 000822 A1, WO 2009/077524 A2 und JP S63 78720 A hingewiesen.

Es ist daher die Aufgabe der Erfindung, eine Formgebungsvorrichtung bereitzustellen, mittels welcher Kunststoffbauteile bzw. kunststoffbasierte Faserverbundbauteile effizienter und wirtschaftlicher hergestellt werden können.

Diese Aufgabe wird erfindungsgemäß durch eine Formgebungsvorrichtung nach Anspruch 1 gelöst.

Die induzierten Wirbelströme verursachen eine Erwärmung der elektrisch leitfähigen Schicht innerhalb weniger Sekunden. Diese Wärme kann somit direkt und lokal begrenzt an ein Gussmaterial (z.B. Polymer oder Matrixpolymer) oder einen Vorformling bzw. ein formgebunden vorliegendes Halbzeug (z.B. eine Matte aus Vliesstoff mit Kunststoff-/Glasanteilen) übertragen werden, welches während eines Formgebungsprozesses an der elektrisch leitfähigen Schicht anliegt. Auf diese Weise kann genau so viel Wärme erzeugt werden, wie für den gewünschten Formgebungsprozess benötigt wird. Eine Wärmeleitung durch den gesamten Körper der Formgebungshalbschale, wie dies bei herkömmlichen Prozessen der Fall ist, ist folglich nicht notwendig. Auch eine Anordnung des Induktors in einem Abstand zu der elektrisch leitfähigen Schicht führt nicht zu einer Erhöhung der Prozesszeit, da das von dem Induktor erzeugte magnetische Feld beispielsweise das mineralische Material des Formgebungsbasiselements oder/und des Formgebungsaufsatzelements, Luft oder andere nicht induzierbare Materialien nahezu verlustfrei durchdringen kann. Eine erfindungsgemäße Formgebungsvorrichtung mit der durch den Induktor induzierbaren elektrisch leitfähigen Schicht kann somit zu kurzen Prozesszeiten und einer günstigeren Energiebilanz sowie einer damit einhergehenden Erhöhung der Wirtschaftlichkeit des Formgebungsprozesses führen. Zudem kann die elektrisch leitfähige Schicht gezielt Bereiche der Formgebungsoberfläche bedecken, welche zu erwärmen sind. Ferner kann, falls das Gussmaterial durch den Induktor anregbare Bestandteile bzw. Zusatzstoffe aufweist, beispielsweise Graphitpartikel, eine noch schnellere Erwärmung des Gussmaterials erzielt werden. Die erfindungsgemäße Formgebungsvorrichtung trägt also dazu bei, Formgebungsprozesse der angesprochenen Art, bei welchen die erfindungsgemäße Formgebungsvorrichtung verwendet wird, günstiger, schneller und flexibler zu gestalten.

Zudem sind mineralische Materialien im Vergleich zu metallischen Werkstoffen kostengünstiger, sodass deren erfindungsgemäße Verwendung für das Formgebungsbasiselement der wenigstens einen Formgebungshalbschale ebenfalls zu einer höheren Wirtschaftlichkeit eines Formgebungsprozesses führen kann, bei welchem die erfindungsgemäße Formgebungsvorrichtung verwendet wird. Des Weiteren ist die Bearbeitung von mineralischen Materialien wesentlich günstiger als jene metallischer Werkstoffe. Gleichzeitig ist es möglich, in mineralischen Materialien feine Strukturen mit hoher Genauigkeit abzubilden, beispielsweise mittels einer Aushärtung des mineralischen Materials in einer Gussform.

Ferner begünstigt die im Vergleich zu metallischen Materialien geringere thermische Leitfähigkeit mineralischer Materialien deren Einsatz als Formgebungsbasiselement der wenigstens einen Formgebungshalbschale, da die in das Formgebungsbasiselement eindringende und folglich in diesem gespeicherte thermische Energie gering ist. D.h. eine Verlängerung der Prozesszeit bei einer prozessbedingten Temperaturänderung aufgrund von in dem Formgebungsbasiselement gespeicherter thermischer Energie ist gering im Vergleich zu herkömmlichen Formwerkzeugen aus metallischem Material. Für die während eines Formgebungsprozesses benötigte Temperaturänderung wird daher bei Verwendung der erfindungsgemäßen Formgebungsvorrichtung vergleichsweise wenig Zeit und wenig Energie benötigt.

Im Falle einer lösbaren Verbindung zwischen dem Formgebungsbasiselement und dem Formgebungsaufsatzelement kann beispielsweise das Formgebungsaufsatzelement, welches in der Regel speziell an das zu fertigende Kunststoffbauteil bzw. kunststoffbasierte Faserverbundbauteil angepasst ist, nach der Fertigung mit einem anderen Formgebungsaufsatzelement ausgetauscht werden, welches speziell an ein anderes zu fertigendes Kunststoffbauteil bzw. kunststoffbasierte Faserverbundbauteil angepasst ist. Das Formgebungsbasisteil mit allen seinen funktionellen Einheiten, wie zum Beispiel dem Induktor, einem (im Folgenden näher erläuterten) Sensor oder einer (im Folgenden näher erläuterten) Temperiervorrichtung, unterliegt somit vorteilhafterweise keinem Werkzeugwechsel. Die Aufteilung der Formgebungshalbschale in das Formgebungsbasiselement und das Formgebungsaufsatzelement sowie die lösbare Verbindung dieser Elemente kann daher zu einer weiteren Kostenreduktion der Formgebungsvorrichtung gegenüber herkömmlichen Formgebungsvorrichtungen führen.

Das mineralische Material kann ein Polymerbeton, vorzugsweise mit hoher Wärmebeständigkeit, sein. Ein Polymerbeton unterscheidet sich von herkömmlichem Beton dadurch, dass kein Zement, sondern ein Kunststoff als Bindemittel eingesetzt wird, um die mineralischen Bestandteile zusammenzuhalten. Besonders hohe mechanische Festigkeiten werden erreicht, je niedriger der Bindemittelanteil ist, da bei einem niedrigen Bindemittelanteil der Kraftübertrag bei Belastung hauptsächlich von Gestein zu Gestein und lediglich noch durch eine Grenzschicht an Kunststoff erfolgt. Der Massenanteil an Kunststoff liegt vorzugsweise bei 10 Gewichts-% bis 15 Gewichts-% im fertigen Beton oder sogar unterhalb von 10 Gewichts-% im fertigen Beton, vorzugsweise bei 7 Gewichts-% im fertigen Beton. Besonders geringe Kunststoffanteile können erzielt werden, wenn bereits im trockenen Zustand eine möglichst dichte Packung erzeugt und dann jedes Körnchen benetzt wird. Vorteile von Polymerbeton liegen daher beispielsweise darin, dass dieser besonders druck- und biegezugfest ist im Vergleich zu normalem Zementbeton, eine gute Maßhaltigkeit und eine hohe Abriebfestigkeit aufweist sowie dessen thermischer Ausdehnungskoeffizient in der Größenordnung von Stahl liegt.

Bei dem mineralischen Material kann es sich vorteilhafterweise auch um Ultrahochfesten Beton (UHPC - Ultra High Performance Concrete) handeln. Ultrahochfester Beton ist besonders gut geeignet, da mit diesem feine Strukturen mit einer sehr hohen Genauigkeit abgebildet werden können. Des Weiteren ist dieser selbstverdichtend, sodass für den Verarbeitungsprozess geringe Energiekosten anfallen. Ein möglicher Ultrahochfester Beton kann beispielsweise EPUDUR, eine Marke der RAMPF Maschinensysteme GmbH & Co. KG, sein, welcher die zuvor genannten Vorteile gleichermaßen aufweist und durch innovative Genauigkeits- und Klebetechnologien besonders langzeitstabil ist.

Ein weiterer Vorteil mineralischer Materialien, beispielsweise Polymerbeton oder UHPC, besteht darin, dass diese mittels eines Gießverfahrens in die gewünschte Form gebracht werden können und während des Gießverfahrens funktionelle Komponenten direkt in diese eingegossen werden können oder entsprechende Hohlräume freigehalten werden können, welche dazu eingerichtet sein können, funktionelle Komponenten aufzunehmen. Auf diese Weise kann die Formgebungsvorrichtung sehr kompakt ausgebildet werden und gleichzeitig können die funktionellen Komponenten vor äußeren Einflüssen geschützt werden. In einer bevorzugten Variante ist zum Beispiel der Induktor, als ein Beispiel für eine derartige funktionelle Komponente, in dem Formgebungsbasiselement angeordnet, vorzugsweise in dieses eingegossen.

Vorteilhafterweise ist die elektrisch leitfähige Schicht derart von dem Formgebungsaufsatzelement umfasst, dass diese in einer dem fertigen Kunststoffbauteil bzw. kunststoffbasierten Faserverbundbauteil im Wesentlichen komplementären Gestalt ausgebildet ist. Es ist daher vorteilhaft, wenn die leitfähige Schicht ein formbares Material zur Ausbildung einer Oberflächenkontur umfasst oder die Struktur der Formgebungsoberfläche abbilden kann. Die elektrisch leitfähige Schicht kann beispielsweise ein Blech sein oder eine auf das Formgebungsaufsatzelement zumindest abschnittsweise, beispielsweise durch Aufsputtern eines Metallpulvers, aufgebrachte Metallschicht sein. Es ist ferner möglich, dass die elektrisch leitfähige Schicht aus einem elektrisch nicht leitfähigen Material mit darin angeordneten elektrisch leitfähigen Elementen, beispielsweise elektrisch leitfähigen Partikeln oder/und elektrisch leitfähigen Fasern gebildet ist. Ferner können alternativ oder zusätzlich elektrisch leitfähige Elemente, beispielsweise elektrisch leitfähige Partikel (z.B. Graphitpartikel) oder/und elektrisch leitfähige Fasern, in dem Formgebungsaufsatzelement, angrenzend an eine Formgebungsoberfläche des Formgebungsaufsatzelements angeordnet sein. In einer weiteren alternativen Ausführung können elektrisch leitfähige Elemente, beispielsweise elektrisch leitfähige Partikel oder/und elektrisch leitfähige Fasern, angrenzend an die Formgebungsoberfläche in das Formgebungsaufsatzelement eingebettet sein.

Um die Haltbarkeit der Formgebungsvorrichtung zu erhöhen und somit auch die Wirtschaftlichkeit eines die Formgebungsvorrichtung verwendenden Formgebungsprozesses zu verbessern, kann die elektrisch leitfähige Schicht des Formgebungsaufsatzelements oder/und die Formgebungsoberfläche des Formgebungsaufsatzelements eine Schutzschicht aufweisen. Die Schutzschicht kann vor Abrasion oder/und Oberflächenveränderungen, beispielsweise durch den Einsatz von Reinigungsmitteln oder anderen Lösungsmitteln, schützen. Die Schutzschicht kann eine Keramikschicht, vorzugsweise eine kältehärtende Keramikschicht, sein, welche zudem den Vorteil aufweisen kann, dass diese die Induktivitäten nicht stört. Ferner kann es sich bei der Schutzschicht auch um einen Hochleistungskunststoff handeln, beispielsweise Polytetrafluorethylen (PTFE).

Um einen möglichst kompakten und einfachen Aufbau der Formgebungsvorrichtung zu erzielen, kann vorgesehen sein, dass es sich bei der elektrisch leitfähigen Schicht und der Schutzschicht um ein und dieselbe Schicht handelt. Beispielsweise kann ein Blech gleichzeitig als elektrisch leitfähige Schicht und als Schutzschicht wirken.

In hydraulisch gebundenen Materialien, zum Beispiel UHPC, befindet sich bekanntermaßen Porenwasser, welches bei einer Erwärmung einen Anstieg des Drucks und damit einhergehende Spannungen innerhalb des mineralischen Materials verursacht. Die Folge kann eine Beschädigung des mineralischen Materials, beispielsweise durch Bildung von Rissen, sein. Eine Möglichkeit eine solche Beschädigung in dem aus mineralischem Material hergestellten Formgebungsbasiselement zu vermeiden, besteht darin, unerwünschte Temperaturerhöhungen innerhalb des mineralischen Materials auf weniger als ca. 150 °C, besser weniger als ca. 100 °C, zu beschränken. Zur Überwachung des Formgebungsbasiselements und zur Vermeidung einer Beschädigung des Formgebungsbasiselements kann ein Sensor, beispielsweise wenigstens ein Temperatursensor oder/und Feuchtesensor oder/und Drucksensor oder/und Spannungssensor, in dem Formgebungsbasiselement angeordnet sein, vorzugsweise in dieses eingegossen sein. Alternativ oder zusätzlich kann auch ein Sensor, beispielsweise wenigstens einer der zuvor genannten Sensoren, in dem Formgebungsaufsatzelement angeordnet, vorzugsweise in dieses eingegossen sein. Es versteht sich, dass hierdurch die Lebensdauer der Formgebungsvorrichtung erhöht werden kann.

In einer Weiterbildung der Erfindung kann das Formgebungsbasiselement, beispielsweise zur Vermeidung von unerwünschten Temperaturerhöhungen, ferner eine Temperiervorrichtung umfassen, welche entweder einer der inneren Oberfläche abgewandten äußeren Oberfläche des Formgebungsbasiselements benachbart angeordnet sein kann oder/und im Volumen des Formgebungsbasiselements angeordnet sein kann, vorzugsweise in dieses eingegossen sein kann. Mittels dieser Temperiervorrichtung können besagte Temperaturschwankungen in dem Formgebungsbasiselement vermieden werden, welche zu Spannungen und im schlimmsten Fall auch Rissen im Inneren des Formgebungsbasiselements führen können. Somit kann mittels der Temperiervorrichtung die Lebensdauer der Formgebungsvorrichtung erhöht werden.

Ferner kann eine unerwünschte Temperaturerhöhung in dem Formgebungsbasiselement dadurch vermieden bzw. verringert werden, dass eine Wärmeleitung ausgehend von der elektrisch leitfähigen Schicht in Richtung des Formgebungsbasiselements verringert bzw. vermieden wird. Dies wird erfindungsgemäß dadurch erreicht, dass das mineralische Material, aus welchem das Formgebungsbasiselement hergestellt ist, wenigstens einen die thermische Leitfähigkeit des mineralischen Materials verringernden Zusatzstoff umfasst. Derartige Zusatzstoffe können zum Beispiel ein Aerogel auf der Basis von Siliziumdioxid (SiO₂) oder Siliziumcarbid (SiC) oder ein anderes Additiv mit einer geringen Wärmeleitfähigkeit sein. Als Materialien mit geringer bzw. niedriger Wärmeleitfähigkeit werden solche verstanden, die eine Wärmeleitfähigkeit λ aufweisen, deren Wert kleiner als 2 W/mK, vorzugsweise kleiner als 1 W/mK, noch bevorzugter kleiner als 0,2 W/mK ist.

Zusätzlich oder alternativ kann eine Wärmeleitung ausgehend von der elektrisch leitfähigen Schicht verringert werden, indem vorzugsweise zwischen dem Formgebungsbasiselement und dem Formgebungsaufsatzelement oder/und in dem Formgebungsbasiselement oder/und in dem Formgebungsaufsatzelement eine wärmeisolierende Schicht angeordnet ist. Als Material für die wärmeisolierende Schicht können alle Materialien verwendet werden, welche eine geringe Wärmeleitfähigkeit aufweisen, beispielsweise Cellulose, oder/und eine poröse Struktur aufweisen, beispielsweise ein Aerogelskelett. Vorzugsweise umfasst die wärmeisolierende Schicht ausschließlich Materialien, in welchen keine wärmeerzeugenden, durch den Induktor induzierbaren Wirbelströme entstehen. Bei der wärmeisolierenden Schicht kann es sich beispielsweise um eine Isolationsmatte handeln. Ebenso ist denkbar, dass die wärmeisolierende Schicht einen oder mehrere Einsatzkörper umfassen kann, von welchen vorzugsweise wenigstens einer einen Hohlraum ausbildet. Ein in dem Hohlraum eingeschlossenes Gas, beispielsweise Luft, kann dabei als Wärmeisolator dienen. Geeignete Einsatzkörper sind beispielsweise solche, welche eine Wabenstruktur oder/und eine Struktur eines gewellten Papieres aufweisen, wobei der Einsatzkörper die zuvor in Bezug auf die wärmeisolierende Schicht genannten Materialien umfassen kann. Der Wert der Wärmeleitfähigkeit λ einer solchen Schicht kann kleiner als 2 W/mK sein, vorzugsweise kleiner als 1 W/mK, noch bevorzugter kleiner als 0,2 W/mK sein. Im Allgemeinen kann die wärmeisolierende Schicht, insbesondere wenn diese eine Struktur mit wenigstens einem darin ausgebildeten mit Gas gefüllten Hohlraum aufweist, vorteilhafterweise zu einer Gewichtsreduzierung der Formgebungshalbschale führen. Dies wiederum erleichtert eine Handhabung der Formgebungshalbschale und wirkt sich somit positiv auf Prozesszeiten und damit auch auf Prozesskosten aus.

Die wärmeisolierende Schicht kann vorzugsweise ein präkeramisches Papier umfassen. Unter einem präkeramischen Papier wird im Zusammenhang mit der vorliegenden Erfindung ein Papier verstanden, in welches spezielle Füllstoffe, wie beispielsweise Silizium oder/und Aluminium, bereits bei der Herstellung des Papiers eingebracht worden sind. Ein präkeramisches Papier kann in verschiedensten Gestalten, unterschiedlichen Größen und Formen, ähnlich einem Blatt Papier, vorliegen, wodurch es sehr gut an die Form des jeweiligen Formgebungsbasiselements bzw. Formgebungsaufsatzelements angepasst werden kann. Ferner kann das präkeramische Papier beispielsweise gefaltet, gewellt oder/und geschichtet vorliegen. Das hat den Vorteil, dass eine strukturelle thermische Entkopplung zwischen an entgegengesetzten Seiten des präkeramischen Papiers direkt oder indirekt angrenzenden Schichten abhängig von der vorliegenden Gestalt des präkeramischen Papieres gezielt eingestellt bzw. verändert werden kann. Auf diese Weise kann der Einsatz eines präkeramischen Papieres das Formgebungsbasiselement aus einem mineralischen Werkstoff vor einer Beschädigung durch zu hohe Temperaturen schützen. Insbesondere kann der Einsatz von präkeramischem Papier als wärmeisolierende Schicht vorgesehen sein, wenn es sich bei dem mineralischen Werkstoff des Formgebungsbasiselements um Polymerbeton handelt. Es versteht sich, dass der Polymerbeton auch durch die Anpassung der Prozessparameter, wie zum Beispiel Druck und Temperatur, zusätzlich vor einer Beschädigung geschützt werden kann.

Beispielsweise kann das Formgebungsaufsatzelement im Wesentlichen, vorzugsweise zu über 80 %, aus einem metallischen Material ausgebildet sein und kann die wärmeisolierende Schicht zwischen dem Formgebungsbasiselement und dem Formgebungsaufsatzelement angeordnet sein oder mit einem der beiden Elemente integral ausgebildet sein. Auf diese Weise kann die Formgebungsoberfläche beispielsweise mit herkömmlich bekannten Verfahren an einem metallischen Material hergestellt werden. Gleichzeitig kann der Anteil an metallischem Material - mit den eingangs genannten Nachteilen ― relativ gering sein. Alternativ oder zusätzlich kann das Formgebungsaufsatzelement ferner ein mineralisches Material umfassen. Beispielsweise könnte das Formgebungsaufsatzelement einen Schichtaufbau mit einer mineralischen Schicht, einem optionalen Kühlelement (wie nachfolgend beschrieben) und/oder einer optionalen wärmeisolierenden Schicht sowie einer metallischen, elektrisch leitfähigen Schicht aufweisen.

Eine unerwünschte Temperaturerhöhung kann zudem in dem Formgebungsaufsatzelement und somit indirekt in dem Formgebungsbasiselement dadurch vermieden bzw. verringert werden, dass eine Wärmeleitung ausgehend von der elektrisch leitfähigen Schicht in Richtung eines Inneren des Formgebungsaufsatzelements verringert bzw. vermieden wird. Dies kann beispielsweise dadurch erreicht werden, dass das mineralische Material, aus welchem das Formgebungsaufsatzelement hergestellt ist, vorzugsweise wenigstens einen die thermische Leitfähigkeit des mineralischen Materials verringernden Zusatzstoff umfasst. Derartige Zusatzstoffe können zum Beispiel ein Aerogel auf der Basis von Siliziumdioxid (SiO₂) oder Siliziumcarbid (SiC) oder ein anderes Additiv mit einer geringen Wärmeleitfähigkeit sein. Als Materialien mit geringer bzw. niedriger Wärmeleitfähigkeit werden solche verstanden, die eine Wärmeleitfähigkeit λ aufweisen, deren Wert kleiner als 2 W/mK, vorzugsweise kleiner als 1 W/mK, noch bevorzugter kleiner als 0,2 W/mK ist.

Anstelle oder zusätzlich zu der wärmeisolierenden Schicht kann das Formgebungsaufsatzelement ferner ein Kühlelement umfassen, welches vorzugsweise an oder/und benachbart zu der elektrisch leitfähigen Schicht angeordnet ist. Das Kühlelement kann vorzugsweise eine Kühlschicht oder/und eine Kühlstruktur aufweisen. Die Kühlstruktur kann zum Beispiel mäanderförmig sein oder/und an die Formgebungsoberfläche oder/und an die elektrisch leitfähige Schicht angepasste Kühlleitungen aufweisen. Das Kühlelement kann dazu eingerichtet sein, das Formgebungsaufsatzelement und somit indirekt auch das Formgebungsbasiselement vor unerwünschten Temperaturänderungen zu schützen oder/und die Formgebungsoberfläche und/oder die elektrisch leitfähige Schicht aktiv zu kühlen. Beispielsweise kann dann, wenn der Induktor keine Wirbelströme in der elektrisch leitfähigen Schicht erzeugt, diese mittels des Kühlelements sehr schnell, vorzugsweise innerhalb weniger Sekunden, abgekühlt werden.

Alternativ oder zusätzlich zu der wärmeisolierenden Schicht oder/und dem Kühlelement kann die Formgebungsvorrichtung ein Wärmerohr umfassen. Als Wärmerohr wird ein Wärmeüberträger verstanden, mittels welchem Wärmemengen transportiert werden können. Es wird bekanntlich zwischen zwei Formen unterschieden, der Heatpipe und dem Zwei-Phasen-Thermosiphon. Das Wärmerohr umfasst meist ein hermetisch abgekoppeltes Volumen, in welchem sich ein Arbeitsmedium, zum Beispiel Wasser oder Ammoniak, befindet. Bei einem Wärmeeintrag in das Wärmerohr erfolgt eine Verdampfung des Arbeitsmediums zu einer Stelle mit niedrigerer Temperatur, an welcher es kondensiert und Kondensationswärme abgibt. Ein Rücktransport des abgekühlten Arbeitsmediums erfolgt bei einem Zwei-Phasen-Thermosipohn durch Schwerkraft oder bei einer Heatpipe durch Kapillarkräfte. Bei der Auswahl des geeigneten Wärmerohrs ist daher auf die Positionierung der Formgebungsvorrichtung zu achten. Beispielsweise könnte eine obere Formgebungshalbschale ein Zwei-Phasen-Thermosiphon und eine untere Formgebungshalbschale eine Heatpipe umfassen. Ferner könnten auch beide Formgebungshalbschalen eine Heatpipe umfassen. Es versteht sich, dass auch eine Mehrzahl von Wärmerohren zumindest teilweise in dem Formgebungselement angeordnet sein kann.

Das Wärmerohr kann zumindest teilweise in dem Formgebungsbasiselement angeordnet sein, beispielsweise in dieses eingegossen sein. Vorzugsweise ist ein Ende des Wärmerohrs an oder/und benachbart zu der elektrisch leitfähigen Schicht angeordnet. Ferner ist denkbar, dass ein anderes Ende des Wärmerohrs von der elektrischen Schicht weg weist. Beispielsweise könnte das andere Ende aus der Formgebungshalbschale herausragen oder/und aktiv gekühlt sein oder/und an oder/und benachbart zu der Temperiervorrichtung angeordnet sein. Vorteilhafterweise kann das Wärmerohr auch bei einem Wechsel des Formgebungsaufsatzelements in dem Formgebungsbasiselement verbleiben. Folglich ist eine Anpassung des Wärmerohrs an eine entsprechende Gestalt des Formgebungsaufsatzelements nicht notwendig.

Ferner kann ein Kontaktelement, vorzugsweise ein Tellerkontakt, in das Formgebungsbasiselement eingegossen sein, welches in Kontakt mit der leitfähigen Schicht steht, wenn das Formgebungsbasiselement mit dem Formgebungsaufsatzelement verbunden ist, und Wärme von der leitfähigen Schicht an das Wärmerohr übertragen.

Eine Anordnung des Wärmerohrs erfolgt vorzugsweise derart, dass eine Wärmeübertragung zwischen dem Induktor und dem Wärmerohr nicht oder nahezu nicht erfolgt. Ferner sollte das Wärmerohr keine durch den Induktor anregbaren Elemente enthalten.

In Weiterbildung der Erfindung wird vorgeschlagen, dass beispielsweise wenigstens eines aus dem Formgebungsbasiselement oder dem Formgebungsaufsatzelement einer der Formgebungshalbschalen von einem Rahmen umgeben ist, an welchem vorzugsweise Führungselemente anordenbar sind. Beispielsweise können an dem Rahmen Halterungen zum Transport oder zum Öffnen der Formgebungsvorrichtung angeordnet sein oder kann der Rahmen dazu eingerichtet sein, Lasten zu übertragen. Der Rahmen ist vorzugsweise so angeordnet, dass der Induktor keine zu einer Erwärmung bzw. lediglich zu einer vernachlässigbaren geringen Erwärmung führenden Wirbelströme in dem Rahmen erzeugen kann. Zusätzlich kann ein isolierendes Material zwischen dem Induktor und dem Rahmen angeordnet sein, um ein Induzieren von Wirbelströmen innerhalb des Rahmens durch den Induktor zu verringern oder gar zu vermeiden. Mögliche isolierende Materialien sind zum Beispiel ein eine organische oder anorganische Basis aufweisendes Aerogel, ein eine organische oder anorganische Basis aufweisender Aerogelverbundwerkstoff, ein Hartschaum mit geringer Leitfähigkeit oder ein anderer Polymerwerkstoff mit geringer Leitfähigkeit.

In einer Ausführungsform der Erfindung umfasst die Formgebungsvorrichtung genau zwei Formgebungshalbschalen, welche vorzugsweise einander gegenüber liegend anordenbar sind, jedoch eine unterschiedliche Gestalt, insbesondere eine unterschiedlich ausgeformte Formgebungsoberflächengestalt, aufweisen können. Die beiden Formgebungshalbschalen können derart dicht zusammengefügt werden, dass sich zwischen ihnen ein Hohlraum ausbildet, welcher vorzugsweise dazu eingerichtet ist, vollständig mit Gussmaterial gefüllt zu werden.

Jede der Formgebungshalbschalen kann gemäß den zuvor genannten Merkmalen ausgebildet sein. Beispielsweise kann der Induktor lediglich in dem Formgebungsbasiselement der ersten Formgebungshalbschale angeordnet sein, vorzugsweise in dieses eingegossen sein, während die zweite Formgebungshalbschale frei von Induktoren ist. Der Induktor der ersten Formgebungshalbschale kann jedoch dazu eingerichtet sein, sowohl in der elektrisch leitfähigen Schicht der ersten als auch der zweiten Formgebungshalbschale Wärme erzeugende Wirbelströme zu induzieren. Ferner ist im Fall, dass jede Formgebungshalbschale einen Induktor aufweist, ein unabhängiges Ansteuern der beiden Induktoren denkbar. Dies kann beispielsweise von Vorteil sein, wenn ein Vorformling bzw. ein formgebunden vorliegendes Halbzeug umgeformt werden soll, dessen Ober- und Unterseite aus unterschiedlichen Materialien bestehen oder diese verschiedene Abdeckungen aufweisen, zum Beispiel bauteilvorderseitig einen Abdeckvliesstoff und bauteilrückseitig eine funktionale Kunststofffolie.

Gemäß einem weiteren Aspekt umfasst die Erfindung ein Formgebungswerkzeug mit einem umzuformenden Teil, wobei das Formgebungswerkzeug einen Induktor und eine oder mehrere Formgebungshalbschalen umfasst, wobei wenigstens eine Formgebungshalbschale ein aus einem mineralischen Material hergestelltes Element, vorzugsweise ein Formgebungsbasiselement wie zuvor beschrieben, umfasst, und wobei das umzuformende Teil eine elektrisch leitfähige Schicht umfasst, welche eine Formgebungsoberfläche des umzuformenden Teils zumindest teilweise bedeckt, wobei der Induktor des Formgebungswerkezugs dazu eingerichtet ist, Wirbelströme in der elektrisch leitfähigen Schicht des umzuformenden Teils zu induzieren.

Es ergeben sich die zuvor in Bezug auf die Formgebungsvorrichtung genannten Vorteile gleichermaßen. Es wird daher mittels des genannten Formgebungswerkzeugs mit einem umzuformenden Teil die Herstellung von Kunststoffbauteilen bzw. kunststoffbasierten Faserverbundbauteilen effizienter und wirtschaftlicher gestaltet.

Insbesondere kann mit dem erfindungsgemäßen Formgebungswerkzeug mit einem umzuformenden Teil eine noch schnellere Aufheizung eines umzuformenden Teils, beispielsweise eines Vorformlings bzw. formgebunden vorliegenden Halbzeugs, erfolgen, da die Erwärmung direkt an dem umzuformenden Teil erfolgt und eine Wärmeleistung lediglich direkt an dem umzuformenden Teil stattfindet.

Gemäß einem weiteren Aspekt umfasst die Erfindung ein Verfahren zum Erwärmen einer Formgebungsoberfläche eines Formgebungsaufsatzelements einer Formgebungshalbschale, vorzugsweise eines Formgebungsaufsatzelements einer zuvor beschriebenen Formgebungsvorrichtung, oder einer Formgebungsoberfläche eines umzuformenden Teils, vorzugsweise eines umzuformenden Teils eines Formgebungswerkzeugs wie zuvor beschrieben, wobei die Formgebungsoberfläche der Formgebungshalbschale oder des umzuformenden Teils mittels eines Induktors erwärmt wird, welcher Wirbelströme in einer der Formgebungsoberfläche benachbart angeordneten elektrisch leitfähigen Schicht induziert.

Es ergeben sich die zuvor in Bezug auf die Formgebungsvorrichtung genannten Vorteile gleichermaßen. Es wird daher mittels des genannten Verfahrens die Herstellung von Kunststoffbauteilen bzw. kunststoffbasierten Faserverbundbauteilen effizienter und wirtschaftlicher gestaltet.

Im Allgemeinen kann eine Formgebungsvorrichtung, vorzugsweise eine zuvor beschriebene Formgebungsvorrichtung, in einem Formgebungsprozess verwendet werden, welcher vorzugsweise die folgenden Schritte umfasst:
Schritt 1: Einbringen eines Gussmaterials oder eines Vorformlings bzw. eines formgebunden vorliegenden Halbzeugs (z.B. eine Matte aus Vliesstoff mit Kunststoff-/Glasanteilen) in eine Formgebungshalbschale, in welcher beispielsweise eine Faser- oder/und Gewebestruktur oder/und ein Prepreg abgelegt sein kann/können,
Schritt 2: Verschließen der Formgebungshalbschale, beispielsweise mit einer weiteren Formgebungshalbschale,
Schritt 3: Erwärmen einer Formgebungsoberfläche eines Formgebungsaufsatzelements der Formgebungshalbschale oder eines umzuformenden Teils mittels eines Induktors, welcher Wirbelströme in einer der Formgebungsoberfläche benachbart angeordneten elektrisch leitfähigen Schicht induziert, und Umformen unter Druck des Gussmaterials oder des Vorformlings bzw. des formgebunden vorliegenden Halbzeugs,
Schritt 4: Abkühlen des umgeformten Gussmaterials oder des umgeformten Vorformlings bzw. des umgeformten Halbzeugs, und
Schritt 5: Entnehmen des Kunststoffbauteils bzw. kunststoffbasierten Faserverbundbauteils aus der oder den Formgebungshalbschale(n), wobei bei einer Verwendung von Gussmaterial der Schritt 2 vor dem Schritt 1 erfolgen kann.

Die Erfindung wird im Folgenden an zwei Ausführungsbeispielen anhand der beigefügten Zeichnungen näher erläutert werden. Es stellt dar:
- Figur 1: eine schematische Darstellung des Querschnitts einer erfindungsgemäßen Formgebungsvorrichtung gemäß einem ersten Ausführungsbeispiel;
- Figur 2: eine schematische Darstellung des Querschnitts einer erfindungsgemäßen Formgebungsvorrichtung gemäß einem zweiten Ausführungsbeispiel;
- Figur 3: eine schematische Darstellung des Querschnitts einer erfindungsgemäßen Formgebungsvorrichtung gemäß einem dritten Ausführungsbeispiel; und
- Figur 4: eine schematische Darstellung des Querschnitts eines erfindungsgemäßen Formgebungswerkzeugs mit einem umzuformenden Teil gemäß einem Ausführungsbeispiel.

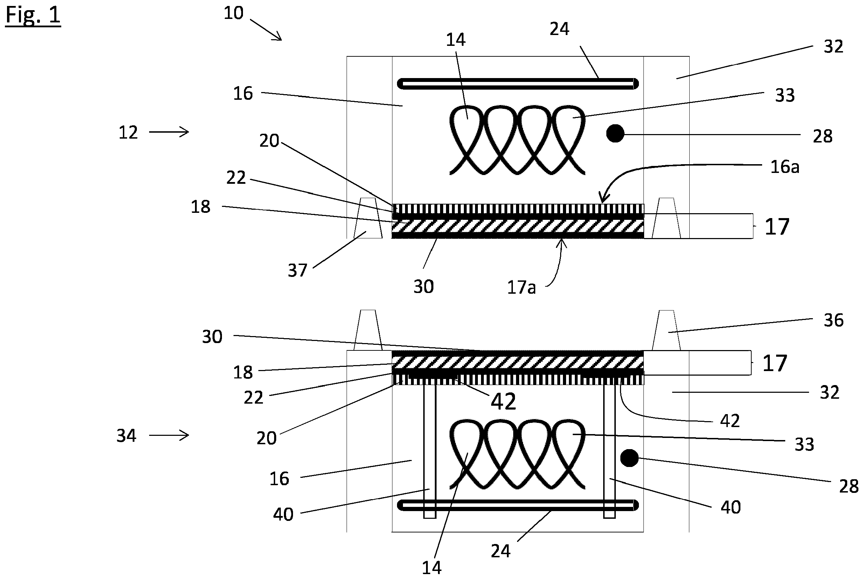

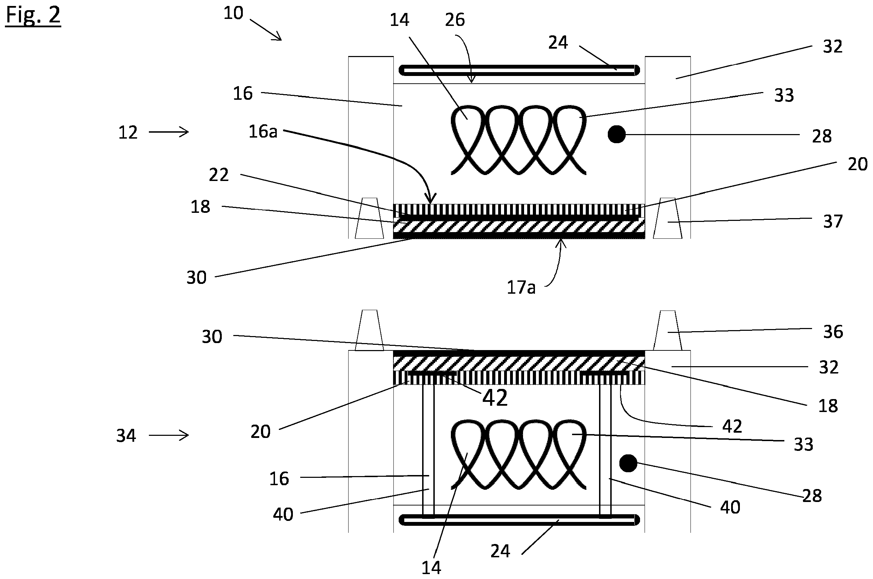

In Figur 1 ist eine Formgebungsvorrichtung ganz allgemein mit 10 bezeichnet. Die Formgebungsvorrichtung 10 umfasst wenigstens eine erste Formgebungshalbschale 12 und einen Induktor 14. Die Formgebungshalbschale 12 umfasst ein aus mineralischem Material hergestelltes Formgebungsbasiselement 16 und ein Formgebungsaufsatzelement 17, an dessen Formgebungsoberfläche 17a eine elektrisch leitfähige Schicht 18 angeordnet sein kann, welche die Formgebungsoberfläche 17a des Formgebungsaufsatzelements 17 zumindest abschnittsweise bedeckt. Das Formgebungsaufsatzelement 17 ist mit dem Formgebungsbasiselement 16 lösbar verbunden oder mit diesem integral ausgebildet. Das Formgebungsaufsatzelement 17 bedeckt eine innere Oberfläche 16a des Formgebungsbasiselements 16 zumindest abschnittsweise und umfasst eine elektrisch leitfähige Schicht 18. Der Induktor 14, welcher beispielsweise, wie in den Ausführungsbeispielen in Figuren 1 und 2 dargestellt, als Induktorspule 33 in das Formgebungsbasiselement 16 eingebettet sein kann, ist dazu eingerichtet, Wirbelströme in der elektrisch leitfähigen Schicht 18 zu induzieren, worauf hin sich diese erwärmt. Die elektrisch leitfähige Schicht 18 kann entweder aus einer mit leitfähigen Partikeln, wie beispielsweise Graphit, versehene keramische Schicht sein oder eine metallische Schicht sein oder eine Schicht aus einem anderen geeigneten Material sein, in welchem Wirbelströme erzeugt werden können. Es ist auch eine Ausführungsform denkbar, in welcher der Induktor 14 außerhalb des Formgebungsbasiselements16 oder sogar außerhalb der Formgebungshalbschale 12, 34 angeordnet ist.

Um einen Wärmeverlust der in der elektrisch leitfähigen Schicht 18 entstehende Wärme oder/und eine zu starke Erwärmung des Formgebungsaufsatzelements 17 oder des Formgebungsbasiselements 16 zu vermeiden, ist es wünschenswert, eine Wärmestrahlung in Richtung eines Inneren des Formgebungsaufsatzelements 17 oder in Richtung des Formgebungsbasiselements 16 der ersten Formgebungshalbschale 12 weitestgehend zu verhindern oder zumindest zu verringern. Dies kann beispielsweise durch einen Schichtaufbau der ersten Formgebungshalbschale 12 erfolgen, mittels welchem eine thermische Entkopplung zwischen der elektrisch leitfähigen Schicht 18 und einer oder mehreren Schichten des Formgebungsaufsatzelements 17 oder zwischen dem Formgebungsaufsatzelement 17 und dem Formgebungsbasiselement 16 bereitgestellt ist.

Eine mögliche Entkopplung ist durch eine Anordnung einer wärmeisolierenden Schicht 20 in dem Formgebungsaufsatzelement 17, benachbart zu der elektrisch leitfähigen Schicht 18 bzw. zwischen dem Formgebungsaufsatzelement 17 und dem Formgebungsbasiselement 16 möglich. Alternativ kann die wärmeisolierende Schicht auch in dem Formgebungsbasiselement 16 angeordnet sein, beispielsweise während des Herstellverfahrens des Formgebungsbasiselements 16 in dieses eingegossen worden sein. Als wärmeisolierende Schicht 20 kann beispielsweise ein thermisch niedrigleitendes Dämmmaterial, beispielsweise in Mattenform, verwendet werden. Dieses könnte bereits während des Gießprozesses zur Herstellung des Formgebungsbasiselements 16 und/oder des Formgebungsaufsatzelements 17 eingebracht werden. Besonders vorteilhaft erscheint in diesem Zusammenhang eine wärmeisolierende Schicht 20 mit einer dünnen Waben- oder Wellpappenstruktur, da diese eine gasgefüllte oder/und poröse Struktur aufweisen können, welche als Isolator wirkt. Ist diese Waben- oder Wellplattenstruktur darüber hinaus selbst aus einem Material mit geringer Wärmeleitfähigkeit, wie beispielsweise Cellulose, aufgebaut oder/und besitzt eine mikroporöse Struktur, wie beispielsweise ein Aerogel-Gerüst, kann eine Wärmedämmung, welche sich nicht oder nur geringfügig negativ auf die mechanische Festigkeit des Formgebungsbasiselements 16 und/oder des Formgebungsaufsatzelements 17 auswirkt, erzielt werden. Als Materialien bzw. Schichten mit geringer bzw. niedriger Wärmeleitfähigkeit werden solche verstanden, die eine Wärmeleitfähigkeit λ aufweisen, deren Wert kleiner als 2 W/mK, vorzugsweise kleiner als 1 W/mK, noch bevorzugter kleiner als 0,2 W/mK ist.

Während eines Formgebungsprozesses, beispielsweise zur Herstellung von kunststoffbasierten Faserverbundbauteilen, schließt sich an einen Verfahrensschritt, in welchem das Gussmaterial aufgeschmolzen und erwärmt wird, ein weiterer Verfahrensschritt an, bei welchem das Gussmaterial abgekühlt wird und erstarrt. D.h. es ist erforderlich, dass sich die elektrisch leitfähige Schicht 18, nachdem diese in einem ersten Verfahrensschritt aufgewärmt wurde, wieder abgekühlt. Eine solche Abkühlung kann einerseits passiv erfolgen, indem keine Wirbelströme mehr in der elektrisch leitfähigen Schicht 18 mittels des Induktors 14 erzeugt werden. Andererseits ist jedoch auch eine aktive Kühlung mittels eines Kühlelements 22 möglich, welches an der elektrisch leitfähigen Schicht 18 angeordnet sein kann oder dieser benachbart sein kann.

Das Kühlelement 22 kann beispielsweise eine Kühlwendel sein, welche dazu eingerichtet ist, zumindest einen Teil der elektrisch leitfähigen Schicht 18 aktiv zu kühlen. Falls die Formgebungsvorrichtung 10 sowohl eine wärmeisolierende Schicht 20 als auch ein Kühlelement 22 aufweist, kann das Kühlelement 22 vorzugsweise zwischen der elektrisch leitfähigen Schicht 18 und der wärmeisolierenden Schicht 20 angeordnet sein. Verfahren zur Aufbringung einer solchen Kühlstruktur und einer sich darüber befindlichen aus einem Metallpulver gebildeten Metallschicht, welche beispielsweise die elektrisch leitfähige Schicht 18 sein kann, sind bereits Stand der Technik.

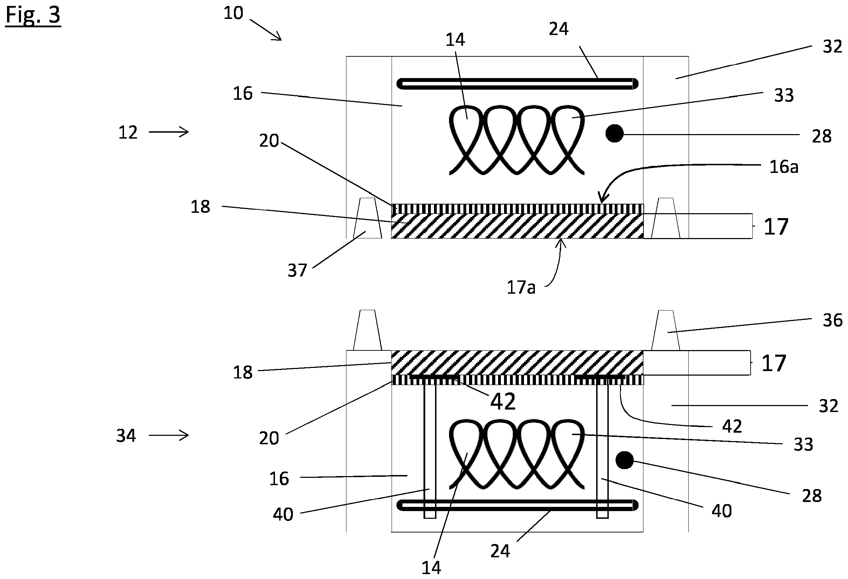

Zusätzlich oder alternativ zu der wärmeisolierenden Schicht 20 oder/und dem Kühlelement 22 kann die erste Formgebungshalbschale 12 eine Temperiervorrichtung 24 umfassen, welche entweder im Volumen des Formgebungsbasiselements 16 angeordnet ist, wie in Figuren 1 und 3 dargestellt, oder/und einer der Formgebungsoberfläche abgewandten Oberfläche 26 benachbart angeordnet ist, wie in Figur 2 dargestellt. Die Temperiervorrichtung 24 kann, unabhängig von dessen Anordnung, dazu eingerichtet sein, eine Erwärmung des Formgebungsbasiselements 16 zu verringern oder gar zu vermeiden.

Eine Überwachung eines Zustands des Formgebungsbasiselements 16 und/oder des Formgebungsaufsatzelements kann beispielsweise dadurch erfolgen, dass in diesem wenigstens ein Sensor 28 angeordnet ist, wobei es sich bei dem wenigstens einen Sensor 28 um einen Temperatursensor oder/und Feuchtesensor oder/und Drucksensor oder/und Spannungssensor handeln kann. Der wenigstens eine Sensor 28 kann während des Gießverfahrens zur Herstellung des Formgebungsbasiselements 16 und/oder des Formgebungsaufsatzelements 16 in diesen eingegossen worden sein.

Im Allgemeinen bietet eine Funktionalisierung des Formgebungsbasiselements 16 durch Eingießen von Komponenten während des Gießverfahrens des Formgebungsbasiselement s16, beispielsweise ein Eingießen des wenigstens einen Sensors 28 oder/und der Temperiervorrichtung 24, die Möglichkeit einer passiven Überwachung als auch einer aktiven Steuerung von umformrelevanten Kenngrößen, welche mit einem der zuvor genannten Sensoren 28 bestimmt oder auf Grundlage der mit einem von diesen gemessenen Werten berechnet werden kann, beispielsweise einer Temperatur des Formgebungsbasiselements 16, einem Innendruck in dem Formgebungsbasiselement 16, einer Spannung in dem Formgebungsbasiselement 16, etc.

Gleichermaßen kann auch eine Funktionalisierung des Formgebungsaufsatzelements 17 erfolgen, wenn in diesem, beispielsweise bei einem Formgebungsaufsatzelement 17 aus einem mineralischen Material durch Eingießen, wenigstens ein Sensor 28 oder das Kühlelement 22 angeordnet ist. Beispielsweise kann mittels eines Temperatursensors die Temperatur der elektrisch leitfähigen Schicht 18 oder/und des Formgebungsaufsatzelements 17 überwacht werden.

Ferner kann eine Schutzschicht 30 die elektrisch leitfähige Schicht 18 oder/und die Formgebungsoberfläche des Formgebungsaufsatzelements 17 bedecken. Die Schutzschicht 30 kann zum Schutz vor Abrasion vorgesehen sein. Ferner kann diese eine gewünschte Struktur oder/und eine gewünschte Rauigkeit aufweisen. Die Schutzschicht 30 kann dazu eingerichtet sein, dass ein Gussmaterial oder ein Vorformling bzw. ein formgebunden vorliegendes Halbzeug während eines Formgebungsprozesses an dieser anliegen kann. Die Schutzschicht 30 kann ferner ein Anhaften von Material während des Formgebungsprozesses verringern oder gar verhindern.

Die Formgebungshalbschale 12 kann mit einem Rahmen 32 versehen sein, in welchem sich beispielsweise auch Führungselemente der Formgebungsvorrichtung 10 befinden können. Der Rahmen 32 kann für die Lastübertragung verantwortlich sein und liegt vorzugsweise außerhalb des eigentlichen Umformumfelds, bildet also vorzugsweise keine Formgebungsoberfläche aus und weist vorzugsweise keine elektrisch leitfähige Schicht auf.

In Figur 3 ist ein Ausführungsbeispiel dargestellt, in welchem das Formgebungsaufsatzelement 17 aus einem metallischen Werkstoff 19 ausgebildet sein kann. Das Formgebungsaufsatzelement 17 aus einem metallischen Werkstoff kann dabei die Formgebungsoberfläche 17a als auch die elektrisch leitfähige Schicht 18 ausbilden und kann ggf. eine Schutzschicht 30 aufweisen. Eine Wärmeübertragung von dem Formgebungsaufsatzelement 17 zu dem Formgebungsbasiselement 16 kann durch die Anordnung einer wärmeisolierenden Schicht 20 zwischen dem Formgebungsaufsatzelement 17 zu dem Formgebungsbasiselement 16 verringert oder gar verhindert werden. Die wärmeisolierenden Schicht 20 kann durch ein präkeramisches Papier ausgebildet sein, welches beispielsweise aus mehreren Lagen, welche beispielsweise gewellt oder gefaltet oder eben sein können, gestapelt ist.

Die Formgebungsvorrichtung 10, wie in den Figuren 1 bis 3 ersichtlich, kann zusätzlich zu der ersten Formgebungshalbschale 12 eine zweite Formgebungshalbschale 34 aufweisen. Die erste und die zweite Formgebungshalbschale 12, 34 können einander gegenüber liegend angeordnet werden, sodass zwischen diesen ein Hohlraum gebildet werden kann, welcher dazu eingerichtet sein kann, während eines Formgebungsprozesses mit Gussmaterial gefüllt zu werden, vorzugsweise vollständig gefüllt zu werden. Der Rahmen 32 einer der Formgebungshalbschalen 12 oder 34 kann wenigstens einen Positionierungsvorsprung 36 aufweisen, während die jeweils andere Formgebungshalbschale 34 oder 12 eine hierzu komplementär ausgebildete und mit diesem zusammenwirkende Positionierungsausnehmung 37 aufweist, so dass eine exakte Positionierung der Formgebungshalbschalen 12, 34 relativ zueinander erzielt werden kann.

Die zweite Formgebungshalbschale 34 kann eine, mehrere oder alle funktionalen Komponenten, welche zuvor in Bezug auf die erste Formgebungshalbschale 12 beschrieben worden sind, beispielsweise ein Formgebungsbasiselement 16 aus mineralischem Material mit einem Induktor 14, wenigstens einem Sensor 28 und einer Temperiervorrichtung 24, ein Formgebungsaufsatzelement 17 mit einer elektrisch leitfähigen Schicht 18, einem Kühlelement 22 und einer Schutzschicht 30, eine wärmeisolierende Schicht 20 zwischen dem Formgebungsbasiselement 16 und dem Formgebungsaufsatzelement 17 oder/und einen Rahmen 32, umfassen.

Weisen beide Formgebungshalbschalen 12, 34 einen Induktor 14 und eine elektrisch leitfähige Schicht 18 auf, kann ein sich zwischen diesen befindliches Gussmaterial oder ein Vorformling bzw. ein formgebunden vorliegendes Halbzeug beidseitig, homogen und sehr schnell aufgeheizt werden.

Alternativ könnte die zweite Formgebungshalbschale 34 ohne Induktor oder/und ohne eine elektrisch leitfähige Schicht ausgebildet sein, jedoch ein Formgebungsaufsatzelement 17 mit einem Kühlelement 22 oder/und ein Formgebungsbasiselement 16 mit einer Temperiervorrichtung 24 aufweisen.

Dies hätte den Vorteil, dass der Herstellprozess durch Verkürzung der Abkühlzeiten positiv beeinflusst werden würde.

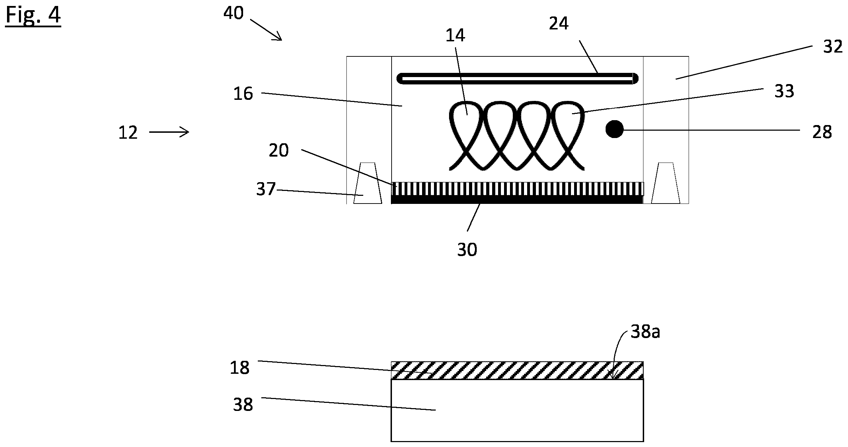

Eine Formgebungshalbschale 12 eines Formgebungswerkzeugs 40 mit einem umzuformenden Teil 38 ist in Figur 4 dargestellt. Es versteht sich, dass das Formgebungswerkzeug, wie zuvor in Bezug auf Figuren 1 bis 3 beschrieben, zwei einander gegenüber liegende Formgebungshalbschalen 12, 34 umfassen kann, auch wenn in Figur 4 lediglich eine zeigt. Die wenigstens eine Formgebungshalbschale 12 ist ein aus einem mineralischen Material hergestelltes Element 16, beispielsweise das zuvor beschriebene Formgebungsbasiselement. Wie dargestellt, umfasst das Formgebungswerkzeug 40, das Element 16, vorzugsweise ein zuvor beschriebenes Formgebungsbasiselement 16, einen als Induktorspule 33 dargestellten Induktor 14 und das umzuformende Teil 38 eine elektrisch leitfähige Schicht 18, welche eine Formgebungsoberfläche 38a des umzuformenden Teils 38 zumindest teilweise bedeckt. Es ist jedoch auch denkbar, dass die elektrisch leitfähige Schicht 18 das umzuformende Teil vollständig bedeckt. Der Induktor 14 des Formgebungswerkezugs 40 ist dazu eingerichtet, Wirbelströme in der elektrisch leitfähigen Schicht 18 des umzuformenden Teils 38 zu induzieren. Ferner kann das umzuformende Teil 38 zusätzlich oder alternativ Partikel in seinem Inneren einschließen, welche sich ebenfalls durch Wirbelströme, induziert durch den Induktor 14, erwärmen. Es versteht sich, dass das umzuformende Teil auch bei Verwendung der zuvor beschriebenen Formgebungsvorrichtung 10 eine elektrisch leitfähige Schicht 18 oder/und Partikel, in welchen durch den Induktor 14 Wirbelströme erzeugt werden können, umfassen kann.

Ferner ist denkbar, dass eine wärmeisolierende Schicht 20, wie zuvor in Bezug auf die Formgebungsvorrichtung 10 beschrieben, an dem Element 16, in Richtung des umzuformenden Teils 38 weisend angeordnet ist. Darüber hinaus kann das Element 16 alle auch Funktionalitäten aufweisen, die zuvor in Bezug auf das Formgebungsbasiselement 16 der Formgebungsvorrichtung 10 beschrieben wurden, wie zum Beispiel einen Sensor 28 und/oder eine Temperiervorrichtung 24 oder/und eine wärmeisolierende Schicht 20 oder/und eine Schutzschicht 30.

Zwei in dem Formgebungsbasiselement 16 angeordnete Wärmerohre 42 zur Abführung von Wärme aus der elektrisch leitfähigen Schicht 18 sind beispielhaft in den Figuren 1 bis 3 in den jeweilig mit 34 bezeichneten Formgebungshalbschalen dargestellt. Es versteht sich, dass ein oder mehrere Wärmerohre 40 auch in den Formgebungsbasiselementen 16 beider Formgebungshalbschalen 12, 34 angeordnet sein können. Vorzugsweise ist ein in der in den Figuren 1 bis 3 dargestellten Perspektive oberes Ende des Wärmerohrs 40 an oder/und benachbart zu der elektrisch leitfähigen Schicht 18 angeordnet. Es kann jedoch auch ein Kontaktelement 42, vorzugsweise ein Tellerkontakt 42, in das Formgebungsbasiselement 16 eingegossen sein, welches in Kontakt mit der leitfähigen Schicht 18 steht, wenn das Formgebungsbasiselement 16 mit dem Formgebungsaufsatzelement 17 verbunden ist. Ein in der in den Figuren 1 bis 3 dargestellten Perspektive unteres Ende des Wärmerohrs 40 weist von der elektrisch leitfähigen Schicht 18 weg und kann vorzugsweise benachbart oder in Kontakt mit der Temperiervorrichtung 24 angeordnet sein. Des Weiteren ist wenigstens ein Wärmerohr 42, vorzugsweise die mehreren Wärmerohre 42, mit ihrer Längserstreckung in Lotrichtung ausgerichtet.

## Patentansprüche

1. Formgebungsvorrichtung (10), umfassend
einen Induktor (14) und
eine oder mehrere Formgebungshalbschalen (12, 34), wobei wenigstens eine Formgebungshalbschale (12, 34) ein aus mineralischem Material hergestelltes Formgebungsbasiselement (16) und ein Formgebungsaufsatzelement (17) umfasst,
wobei
das Formgebungsaufsatzelement (17)
- mit dem Formgebungsbasiselement (16) lösbar verbunden oder mit diesem integral ausgebildet ist,
- eine innere Oberfläche (16a) des Formgebungsbasiselements (16) zumindest abschnittsweise bedeckt und
- eine elektrisch leitfähige Schicht (18) umfasst,
und der Induktor (14) dazu eingerichtet ist, Wirbelströme in der elektrisch leitfähigen Schicht (18) zu induzieren,
**dadurch gekennzeichnet, dass** das mineralische Material, aus welchem das Formgebungsbasiselement (16) oder/und das Formgebungsaufsatzelement (17) hergestellt ist/sind, wenigstens einen die thermische Leitfähigkeit des mineralischen Materials verringernden Zusatzstoff umfasst.

2. Formgebungsvorrichtung (10) nach Anspruch 1,
**dadurch gekennzeichnet, dass** das mineralische Material Ultrahochfester Beton oder Polymerbeton ist.

3. Formgebungsvorrichtung (10) nach Anspruch 1 oder 2,
**dadurch gekennzeichnet, dass** der Induktor (14) in dem Formgebungsbasiselement (16) angeordnet ist, vorzugsweise in dieses eingegossen ist.

4. Formgebungsvorrichtung (10) nach einem der vorhergehenden Ansprüche,
**dadurch gekennzeichnet, dass** die elektrisch leitfähige Schicht (18) aus einem elektrisch nicht leitfähigen Material mit darin angeordneten elektrisch leitfähigen Elementen, beispielsweise elektrisch leitfähigen Partikeln oder/und Fasern, oder/und durch in dem Formgebungsaufsatzelement (17), angrenzend an eine Formgebungsoberfläche des Formgebungsaufsatzelements (17) angeordneten, beispielsweise in dieses eingebetteten, elektrisch leitfähigen Elementen gebildet ist.

5. Formgebungsvorrichtung (10) nach einem der vorhergehenden Ansprüche,
**dadurch gekennzeichnet, dass** die Formgebungsoberfläche (17a) des Formgebungsaufsatzelements (17) oder/und die elektrisch leitfähige Schicht (18) des Formgebungsaufsatzelements (17) eine Schutzschicht (30) aufweist/aufweisen, wobei es sich vorzugsweise bei der elektrisch leitfähigen Schicht (18) und der Schutzschicht (30) um dieselbe Schicht handelt.

6. Formgebungsvorrichtung (10) nach einem der vorhergehenden Ansprüche,
**dadurch gekennzeichnet, dass** wenigstens ein Sensor (28), beispielsweise wenigstens ein Temperatursensor oder/und ein Feuchtesensor oder/und ein Drucksensor oder/und ein Spannungssensor, in dem Formgebungsbasiselement (16) oder/und dem Formgebungsaufsatzelement (17) angeordnet ist/sind, vorzugsweise in einem oder beiden Elementen (16, 17) eingegossen ist.

7. Formgebungsvorrichtung (10) nach einem der vorhergehenden Ansprüche,
**dadurch gekennzeichnet, dass** das Formgebungsbasiselement (16) ferner eine Temperiervorrichtung (24) umfasst, welche entweder einer der inneren Oberfläche (16a) abgewandten äußeren Oberfläche des Formgebungsbasiselements (16) benachbart angeordnet ist oder/und im Volumen des Formgebungsbasiselements (16) angeordnet ist, vorzugsweise in dieses eingegossen ist.

8. Formgebungsvorrichtung (10) nach einem der vorhergehenden Ansprüche,
**dadurch gekennzeichnet, dass** zwischen dem Formgebungsbasiselement (16) und dem Formgebungsaufsatzelement (17) oder/und in dem Formgebungsbasiselement (16) oder/und in dem Formgebungsaufsatzelement (17) eine wärmeisolierende Schicht (20) angeordnet ist.

9. Formgebungsvorrichtung (10) nach Anspruch 8,
**dadurch gekennzeichnet, dass** die wärmeisolierende Schicht (20) einen oder mehrere Einsatzkörper umfasst, von welchen wenigstens einer einen Hohlraum ausbildet,
oder/und
die wärmeisolierende Schicht (20) ein präkeramisches Papier umfasst.

10. Formgebungsvorrichtung (10) nach einem der vorhergehenden Ansprüche,
**dadurch gekennzeichnet, dass** das Formgebungsaufsatzelement (17) ferner ein mineralisches Material umfasst oder/und das Formgebungsaufsatzelement (17) im Wesentlichen, vorzugsweise über 80 %, aus einem metallischen Material ausgebildet ist, und die wärmeisolierende Schicht (20) zwischen dem Formgebungsbasiselement (16) und dem Formgebungsaufsatzelement (17) angeordnet ist oder mit einem der beiden Elemente (16, 17) integral ausgebildet ist.

11. Formgebungsvorrichtung (10) nach einem der vorhergehenden Ansprüche,
**dadurch gekennzeichnet, dass** das Formgebungsaufsatzelement (17) ferner ein Kühlelement (22), welches an oder/und benachbart zu der elektrisch leitfähigen Schicht (18) angeordnet ist,
oder/und
ein Wärmerohr (21) umfasst, welches zumindest teilweise in dem Formgebungsbasiselement (16) angeordnet ist, wobei vorzugsweise ein Ende des Wärmerohrs (40) an oder/und benachbart zu der elektrisch leitfähigen Schicht (18) angeordnet ist.

12. Formgebungsvorrichtung (10) nach einem der vorhergehenden Ansprüche,
**dadurch gekennzeichnet, dass** die Formgebungsvorrichtung (10) genau zwei Formgebungshalbschalen (12, 34) umfasst, welche einander gegenüberliegend anordenbar sind.

13. Formgebungswerkzeug (40) mit einem umzuformenden Teil (38),
wobei das Formgebungswerkzeug (40) umfasst:
eine oder mehrere Formgebungshalbschalen (12, 34), wobei wenigstens eine Formgebungshalbschale (12, 34) ein aus einem mineralischen Material hergestelltes Formgebungsbasiselement (16) wie in einem der Ansprüche 1 bis 12 definiert, umfasst, und
einen Induktor (14),
wobei das umzuformende Teil (38) umfasst:
eine elektrisch leitfähige Schicht (18), welche eine Formgebungsoberfläche (38a) des umzuformenden Teils (38) zumindest teilweise bedeckt,
wobei der Induktor (14) des Formgebungswerkezugs (40) dazu eingerichtet ist, Wirbelströme in der elektrisch leitfähigen Schicht (18) des umzuformenden Teils (38) zu induzieren.

14. Verfahren zum Erwärmen einer Formgebungsoberfläche eines Formgebungsaufsatzelements (17) einer Formgebungshalbschale (12, 34), vorzugsweise eines Formgebungsaufsatzelements (17) einer Formgebungsvorrichtung (10) nach einem der vorhergehenden Ansprüche 1 bis 12, oder einer Formgebungsoberfläche (38a) eines umzuformenden Teils (38), vorzugsweise eines umzuformenden Teils (38) eines Formgebungswerkzeugs (40) nach Anspruch 13, wobei die Formgebungsoberfläche (17a; 38a) der Formgebungshalbschale (12, 34) oder des umzuformenden Teils (38) mittels eines Induktors (14) erwärmt wird, welcher Wirbelströme in einer der Formgebungsoberfläche (17a; 38a) benachbart angeordneten elektrisch leitfähigen Schicht (18) induziert,
**dadurch gekennzeichnet, dass** das Verfahren ferner den Schritt umfasst:
Bereitstellen wenigstens eines Zusatzstoffs, welcher die thermische Leitfähigkeit eines mineralischen Materials verringert, aus welchem das Formgebungsbasiselement (16) oder/und das Formgebungsaufsatzelement (17) hergestellt ist/sind.

## Claims

1. Shaping device (10) comprising
an inductor (14) and
one or more shaping half-shells (12, 34), at least one shaping half-shell (12, 34) comprising a bottom shaping element (16) made of mineral material and a top shaping element (17),
wherein
the top shaping element (17)
- is releasably connected to the bottom shaping element (16) or integrally formed with it,
- covers at least partially an inner surface (16a) of the bottom shaping element (16) and
- comprises an electrically conductive layer (18),
and the inductor (14) is set up to induce eddy currents in the electrically conductive layer (18),
**characterised in that** the mineral material from which the bottom shaping element (16) and/or the top shaping element (17) is/are made comprises at least one additive which reduces the thermal conductivity of the mineral material.

2. Shaping device (10) according to claim 1,
**characterised in that** the mineral material is ultra high strength concrete or polymer concrete.

3. Shaping device (10) according to claim 1 or 2,
**characterised in that** the inductor (14) is arranged in the bottom shaping element (16), preferably cast into it.

4. Shaping device (10) according to one of the preceding claims,
**characterised in that** the electrically conductive layer (18) is made of an electrically non-conductive material with electrically conductive elements arranged therein, for example electrically conductive particles and/or fibers, and/or by electrically conductive elements, which are arranged adjacent to a shaping surface of the top shaping element (17), for example embedded in the top shaping element (17).

5. Shaping device (10) according to one of the preceding claims,
**characterised in that** the shaping surface (17a) of the top shaping element (17) and/or the electrically conductive layer (18) of the top shaping element (17) has/have a protective layer (30), wherein preferably the electrically conductive layer (18) and the protective layer (30) are the same layer.

6. Shaping device (10) according to one of the preceding claims,
**characterised in that** at least one sensor (28), for example at least one temperature sensor and/or one humidity sensor and/or one pressure sensor and/or one voltage sensor, is/are arranged in the bottom shaping element (16) and/or that the top shaping element (17) is preferably cast into one or both elements (16, 17).

7. Shaping device (10) according to one of the preceding claims,
**characterised in that** the bottom shaping element (16) further comprises a temperature control device (24) which is either arranged adjacent to an outer surface of the bottom shaping element (16) facing away from the inner surface (16a) and/or is arranged in the volume of the bottom shaping element (16), is preferably cast into the latter.

8. Shaping device (10) according to one of the preceding claims,
**characterised in that** a heat-insulating layer (20) is arranged between the bottom shaping element (16) and the top shaping element (17), and/or in the bottom shaping element (16), and/or in the top shaping element (17).

9. Shaping device (10) according to claim 9,
**characterised in that** the heat-insulating layer (20) comprises one or more insert bodies, at least one of which forms a cavity,
and/or
the heat insulating layer (20) comprises a preceramic paper.

10. Shaping device (10) according to one of the preceding claims, **characterised in that** the top shaping element (17) further comprises a mineral material, and/or that preferably more than 80 % of the top shaping element (17) is essentially made of a metallic material, and that the heat-insulating layer (20) is arranged between the bottom shaping element (16) and the top shaping element (17), or it is integrally formed with one of said two elements (16, 17).

11. Shaping device (10) according to one of the preceding claims,
**characterised in that** the top shaping element (17) further comprises a cooling element (22) which is arranged on and/or adjacent to the electrically conductive layer (18),
and/or
comprises a heat pipe (21) which is arranged at least partially in the bottom shaping element (16), preferably one end of the heat pipe (40) being arranged on and/or adjacent to the electrically conductive layer (18).

12. Shaping device (10) according to one of the preceding claims,
**characterised in that** the shaping device (10) comprises exactly two shaping half-shells (12, 34) which can be arranged opposite one another.

13. Shaping mould (40) with a part to be formed (38),
wherein the shaping mould (40) comprises:
one or more shaping half-shells (12, 34), at least one shaping half-shell (12, 34) comprising a bottom shaping element (16) as defined in one of claims 1 to 12 made of a mineral material, and
an inductor (14),
wherein the part to be formed (38) comprises:
an electrically conductive layer (18) which at least partially covers a shaping surface (38a) of the part to be formed (38),
wherein the inductor (14) of the shaping mould (40) is set up to induce eddy currents in the electrically conductive layer (18) of the part to be formed (38).

14. Method for heating a shaping surface of a top shaping element (17) of a shaping half-shell (12, 34), preferably a top shaping element (17) of a shaping device (10) according to one of the preceding claims 1 to 12, or a shaping surface (38a) of a part to be formed (38), preferably a part to be formed (38) of a shaping mould (40) according to claim 13, wherein the shaping surface (17a; 38a) of the shaping half-shell (12, 34) or of the part to be formed (38) is heated by means of an inductor (14) which induces eddy currents in an electrically conductive layer (18) arranged adjacent to the shaping surface (17a; 38a),
**characterised in that** the method further comprises the step of:
providing at least one additive which reduces the thermal conductivity of the mineral material, from which the bottom shaping element (16) and/or the top shaping element (17) is/are formed.

## Revendications

1. Dispositif de mise en forme (10), comprenant
un inducteur (14) et
une ou plusieurs demi-coques de mise en forme (12, 34), au moins une demicoque de mise en forme (12, 34) comprenant un élément de base de mise en forme (16) réalisé en matériau minéral et un élément superposé de mise en forme (17), dans lequel
l'élément superposé de mise en forme (17)
― est relié de manière amovible à l'élément de base de mise en forme (16) ou fait partie intégrante de celui-ci,
― recouvre une surface intérieure (16a) de l'élément de base de mise en forme (16) au moins par sections, et
― comprend une couche électriquement conductrice (18),
et l'inducteur (14) est adapté pour induire des courants de Foucault dans la couche électriquement conductrice (18),
**caractérisé en ce que** le matériau minéral, à partir duquel l'élément de base de mise en forme (16) ou/et l'élément superposé de mise en forme (17) est/sont réalisés, comprend au moins un additif réduisant la conductivité thermique du matériau minéral.

2. Dispositif de mise en forme (10) selon la revendication 1,
**caractérisé en ce que** le matériau minéral est un béton à ultra-haute résistance ou un béton polymère.

3. Dispositif de mise en forme (10) selon la revendication 1 ou 2,
**caractérisé en ce que** l'inducteur (14) est disposé dans l'élément de base de mise en forme (16), de préférence moulé dans celui-ci.

4. Dispositif de mise en forme (10) selon l'une des revendications précédentes,
**caractérisé en ce que** la couche électriquement conductrice (18) est formée d'un matériau électriquement non conducteur avec des éléments électriquement conducteurs disposés dans celui-ci, par exemple des particules et/ou des fibres électriquement conductrices, et/ou par des éléments électriquement conducteurs disposés dans l'élément superposé de mise en forme (17) adjacents à une surface de mise en forme de l'élément superposé de mise en forme (17), par exemple noyés dans celui-ci.

5. Dispositif de mise en forme (10) selon l'une des revendications précédentes,
**caractérisé en ce que** la surface de mise en forme (17a) de l'élément superposé de mise en forme (17) ou/et la couche électriquement conductrice (18) de l'élément superposé de mise en forme (17) comporte(nt) une couche de protection (30), la couche électriquement conductrice (18) et la couche de protection (30) étant de préférence la même couche.

6. Dispositif de mise en forme (10) selon l'une des revendications précédentes,
**caractérisé en ce qu'**au moins un capteur (28), par exemple au moins un capteur de température et/ou un capteur d'humidité et/ou un capteur de pression et/ou un capteur de tension, est disposé dans l'élément de base de mise en forme (16) et/ou l'élément superposé de mise en forme (17), de préférence est coulé dans l'un ou les deux éléments (16, 17).

7. Dispositif de mise en forme (10) selon l'une des revendications précédentes,
**caractérisé en ce que** l'élément de base de mise en forme (16) comprend en outre un dispositif de trempe (24) qui est soit disposé de manière adjacente à une surface extérieure de l'élément de base de mise en forme (16) opposée à la surface intérieure (16a), soit/et est disposé dans le volume de l'élément de base de mise en forme (16), de préférence coulé dans celui-ci.

8. Dispositif de mise en forme (10) selon l'une des revendications précédentes,
**caractérisé en ce qu'**une couche thermo-isolante (20) est disposée entre l'élément de base de mise en forme (16) et l'élément superposé de mise en forme (17) ou/et dans l'élément de base de mise en forme (16) ou/et dans l'élément superposé de mise en forme (17).

9. Dispositif de mise en forme (10) selon la revendication 8,
**caractérisé en ce que** la couche thermo-isolante (20) comprend un ou plusieurs corps d'insertion, dont au moins un forme une cavité,
ou/et
la couche thermo-isolante (20) comprend un papier précéramique.

10. Dispositif de mise en forme (10) selon l'une des revendications précédentes,
**caractérisé en ce que** l'élément superposé de mise en forme (17) comprend en outre un matériau minéral ou/et l'élément superposé de mise en forme (17) est formé essentiellement, de préférence à plus de 80%, d'un matériau métallique, et la couche thermo-isolante (20) est disposée entre l'élément de base de mise en forme (16) et l'élément superposé de mise en forme (17) ou est formée intégralement avec l'un des deux éléments (16, 17).

11. Dispositif de mise en forme (10) selon l'une des revendications précédentes,
**caractérisé en ce que** l'élément superposé de mise en forme (17) comprend en outre un élément de refroidissement (22) disposé sur ou/et adjacent à la couche électriquement conductrice (18),
ou/et
un caloduc (21) disposé au moins partiellement dans l'élément de base de mise en forme (16), dans lequel de préférence une extrémité du caloduc (40) est disposée sur ou/et adjacente à la couche électriquement conductrice (18).

12. Dispositif de mise en forme (10) selon l'une des revendications précédentes,
**caractérisé en ce que** le dispositif de mise en forme (10) comprend exactement deux demi-coquilles de mise en forme (12, 34) qui peuvent être disposées l'une en face de l'autre.

13. Outil de mise en forme (40) comprenant une partie (38) à façonner, l'outil de mise en forme (40) comprenant :
une ou plusieurs demi-coquilles de mise en forme (12, 34), dans lequel au moins une demi-coquille de mise en forme (12, 34) comprend un élément de base de mise en forme (16) constitué d'un matériau minéral tel que défini dans l'une des revendications 1 à 12, et
un inducteur (14),
la partie (38) à former comprenant :
une couche électriquement conductrice (18) recouvrant au moins partiellement une surface de formation (38a) de la partie (38) à former,
dans lequel l'inducteur (14) de l'outil de mise en forme (40) est adapté pour induire des courants de Foucault dans la couche électriquement conductrice (18) de la partie (38) à former.

14. Procédé de chauffage d'une surface de mise en forme d'un élément superposé de mise en forme (17) d'une demi-coquille de mise en forme (12, 34), de préférence d'un élément superposé de mise en forme (17) d'un dispositif de mise en forme (10) selon l'une des revendications précédentes 1 à 12, ou d'une surface de mise en forme (38a) d'une partie à former (38), de préférence d'une pièce à former (38) d'un outil de mise en forme (40) selon la revendication 13, dans lequel la surface de mise en forme (17a ; 38a) de la demi-coquille de mise en forme (12, 34) ou de la partie à former (38) est chauffée au moyen d'un inducteur (14) qui induit des courants de Foucault dans une couche électriquement conductrice (18) disposée adjacente à la surface de mise en forme (17a ; 38a),
**caractérisé en ce que** le procédé comprend en outre l'étape consistant à :
fournir au moins un additif qui réduit la conductivité thermique d'un matériau minéral à partir duquel l'élément de base de mise en forme (16) et/ou l'élément superposé de mise en forme (17) est/sont réalisés.
